# EUROPEAN PATENT APPLICATION

(11) **EP 4 751 897 A1**
(43) Date of publication of application: **03.06.2026**
(21) Application number: 25216326.6
(22) Date of filing: 17.11.2025
(51) Int. Cl.: B29C 70/08, B32B 5/02, B32B 5/26, B32B 7/022, B32B 7/027

(54) **METHODS FOR MANUFACTURING COMPOSITE STRUCTURES WITH CARBON-REINFORCED COMPOSITES AND GLASS-REINFORCED COMPOSITES**

(30) Priority: 27.11.2024 US 202418962488
(71) Applicant: The Boeing Company, Arlington, VA 22202 (US)
(72) Inventor: Pantoja, Marcos, Arlington, 22202 (US); Sundquist, David J., Arlington, 22202 (US); Saguto, Gregory P., Arlington, 22202 (US); Olivares, David G., Arlington, 22202 (US)
(74) Representative: Arnold & Siedsma

(57) **Abstract**

A method (1000) for manufacturing a composite structure (2000) comprising a carbon-reinforced composite component (2010) and a glass-reinforced composite component (2020), the method (1000) including contacting (1200) a glass-reinforced composite material (2200) with a carbon-reinforced composite material (2100) to yield a composite layup (2300), the glass-reinforced composite material (2200) comprising a glass reinforcement material (2220) and a polymeric matrix material (2210), wherein the glass reinforcement material has a silica content of at least 60 percent, and co-curing (1300) the composite layup (2300).

## Description

### FIELD

The present disclosure relates to fiberglass composite shimmed composite structures and, more particularly, to methods for manufacturing composite structures with carbon-reinforced composite materials and glass-reinforced composite materials.

### BACKGROUND

In industries such as aerospace and automotive, carbon fiber composites are often used in combination with metals like aluminum to optimize strength-to-weight ratios, improve fuel efficiency, and enhance overall performance. However, when carbon fiber composites are directly attached to aluminum, galvanic corrosion can occur due to electrochemical interactions between the carbon fiber and aluminum. This corrosion degrades the structural integrity of the components over time.

To prevent this, a fiberglass composite shim is typically placed between the carbon fiber and the metal. Fiberglass, being non-conductive, acts as an insulating barrier, eliminating the risk of galvanic reactions and ensuring long-term durability in applications involving aluminum.

Despite this solution, the co-curing of fiberglass layers onto structural composites presents challenges. Warpage often results from the difference in the coefficient of thermal expansion (CTE) between the fiberglass reinforced composite and the carbon fiber reinforced composite. This mismatch necessitates complex bonding methods, including extensive surface preparation and prolonged curing cycles to mitigate residual stresses, all of which lead to inefficiencies and higher production costs.

Accordingly, those skilled in the art continue with research and development efforts in the field of fiberglass composite shimmed composite structures.

### SUMMARY

Disclosed are methods for manufacturing fiberglass composite shimmed composite structures.

In one example, the disclosed method for manufacturing a composite structure having a carbon-reinforced composite component and a glass-reinforced composite component includes contacting a glass-reinforced composite material with a carbon-reinforced composite material to yield a composite layup, the glass-reinforced composite material comprising a glass reinforcement material and a polymeric matrix material, wherein the glass reinforcement material has a low coefficient of thermal expansion and/or has a silica content of at least 60 percent, by weight, and co-curing and/or co-consolidating the composite layup.

The composite layup may comprise at least one of S-2 glass and Astroquarts. The glass reinforcement material may comprise fiberglass. The glass reinforcement material may have a high silica content. The glass reinforcement material may have a silica content of at least 60 percent, by weight, of at least 80 percent, by weight, or of at least 99 percent, by weight. The glass reinforcement material may have a coefficient of thermal expansion between about 0.1 µm/m°C and about 4 µm/m°C. The glass reinforcement material may have a coefficient of thermal expansion of at least 0.5 µm/m°C. The glass reinforcement material may have a coefficient of thermal expansion of at most 4 µm/m°C. The polymeric matrix material of the glass-reinforced composite material may comprise a thermoset resin, which may comprise epoxy, and/or may comprise at least one of epoxy, bismaleimide, cyanate ester, and polyimide. The carbon-reinforced composite material may comprise a carbon reinforcement material and a polymeric matrix material. The carbon reinforcement material may comprise carbon fibers. The carbon reinforcement material may have a coefficient of thermal expansion of at most 2 µm/m°C. The carbon reinforcement material may have a coefficient of thermal expansion of at most 1.5 µm/m°C. The carbon reinforcement material may have a coefficient of thermal expansion of at most 1 µm/m°C. The polymeric matrix material of the carbon-reinforced composite material may comprise a thermoset resin. The thermoset resin may comprise epoxy, and/or at least one of epoxy, bismaleimide, cyanate ester, and polyimide. The polymeric matrix material of the carbon-reinforced composite material and the polymeric matrix material of the glass-reinforced composite material may be compositionally the same. The polymeric matrix material of the carbon-reinforced composite material and the polymeric matrix material of the glass-reinforced composite material may be compositionally different. A coefficient of thermal expansion of the glass reinforcement material may be between about 30 percent and about 200 percent of a coefficient of thermal expansion of the carbon reinforcement material. A coefficient of thermal expansion of the glass reinforcement material may be between about 35 percent and about 150 percent of a coefficient of thermal expansion of the carbon reinforcement material. The glass-reinforced composite material may have an average cross-sectional thickness between about 0.508 mm (0.02 inch) and about 2.54 mm (0.1 inch). The carbon-reinforced composite material may have an average cross-sectional thickness that is at least 10 times greater than the average cross-sectional thickness of the glass-reinforced composite material. The co-curing may be performed in an autoclave. The co-curing may be performed to achieve a degree of cure of at least 90 percent. The method may further comprise, prior to contacting the glass-reinforced composite material with the carbon-reinforced composite material, positioning the carbon-reinforced composite material on a tool surface of a tool. The composite structure may further comprise an interface between the carbon-reinforced composite component and the glass-reinforced composite component, wherein the interface may comprise a single cross-linked phase.

In one example, the disclosed method for manufacturing a composite structure having a carbon fiber-reinforced composite component and a glass fiber-reinforced composite component includes contacting a glass fiber-reinforced composite material with a carbon fiber-reinforced composite material to yield a composite layup, preferably the glass-reinforced composite material comprising a glass reinforcement material and a polymeric matrix material, the glass fiber-reinforced composite material including a glass reinforcement having a silica content of at least 60 percent, by weight, and co-consolidating and/or co-curing the composite layup.

The glass reinforcement material may comprise fiberglass. The glass reinforcement material may have a silica content of at least 64 percent. The glass reinforcement material may have a silica content of at least 80 percent. The glass reinforcement material may have a silica content of at least 99 percent. The glass reinforcement material may have a coefficient of thermal expansion between about 0.1 µm/m°C and about 4 µm/m°C. The glass reinforcement material may have a coefficient of thermal expansion of at least 0.5 µm/m°C. The glass reinforcement material may have a coefficient of thermal expansion of at most 4 µm/m°C. The polymeric matrix material of the glass-reinforced composite material may comprise a thermoplastic. The thermoplastic may comprise at least one of polyether-ketone-ketone (PEKK), polyether-ether-ketone (PEEK), polyphenylene sulfide (PPS), and polyetherimide (PEI). The carbon-reinforced composite material may comprise a carbon reinforcement material and a polymeric matrix material. The carbon reinforcement material may have a coefficient of thermal expansion of at most 2 µm/m°C. The carbon reinforcement material may have a coefficient of thermal expansion of at most 1.5 µm/m°C. The carbon reinforcement material may have a coefficient of thermal expansion of at most 1 µm/m°C. The polymeric matrix material of the carbon-reinforced composite material may comprise a thermoplastic. The thermoplastic may comprise at least one of polyether-ketone-ketone (PEKK), polyether-ether-ketone (PEEK), polyphenylene sulfide (PPS), and polyetherimide (PEI). The polymeric matrix material of the carbon-reinforced composite material and the polymeric matrix material of the glass-reinforced composite material may be compositionally the same. The polymeric matrix material of the carbon-reinforced composite material and the polymeric matrix material of the glass-reinforced composite material may be compositionally different. A coefficient of thermal expansion of the glass reinforcement material may be between about 30 percent and about 200 percent of a coefficient of thermal expansion of the carbon reinforcement material. A coefficient of thermal expansion of the glass reinforcement material may be between about 35 percent and about 150 percent of a coefficient of thermal expansion of the carbon reinforcement material. The glass-reinforced composite material may have an average cross-sectional thickness between about 0.508 mm (0.02 inch) and about 2.54 mm (0.1 inch). The carbon-reinforced composite material may have an average cross-sectional thickness that is at least 10 times greater than the average cross-sectional thickness of the glass-reinforced composite material. The co-curing and/or co-consolidating may be performed in an autoclave. The composite structure may further comprise an interface between the carbon-reinforced composite component and the glass-reinforced composite component, wherein the interface may comprise a single co-consolidated phase.

In another example, the disclosed method for manufacturing a composite structure having a carbon fiber-reinforced composite component and a glass fiber-reinforced composite component includes contacting a glass fiber-reinforced composite material with a carbon fiber-reinforced composite material to yield a composite layup, the glass fiber-reinforced composite material including a glass reinforcement having a silica content of at least 60 percent, by weight and a second polymeric matrix material, carbon fiber-reinforced composite material including a first polymeric matrix material, wherein the first polymeric matrix material and the second polymeric matrix material are thermoplastic, and co-curing and/or co-consolidating the composite layup.

In another example, the disclosed method for manufacturing a composite structure having a carbon fiber-reinforced composite component and a glass fiber-reinforced composite component includes contacting a glass-reinforced composite material with a carbon-reinforced composite material to yield a composite layup, the glass-reinforced composite material comprising a glass reinforcement material and a polymeric matrix material, a carbon-reinforced composite material comprising a carbon reinforcement material and a polymeric matrix material, and co-curing the composite layup, wherein the glass reinforcement material has a low coefficient of thermal expansion (CTE) that substantially matches a CTE of the carbon reinforcement material such that the low CTE of the glass reinforcement material minimizes residual stresses that causes warpage during the co-curing.

Also disclosed are composite structures.

In one example, the disclosed composite structure includes a carbon-reinforced composite component and a glass-reinforced composite component connected to the carbon-reinforced composite component, wherein the glass-reinforced composite component includes a glass reinforcement material and a polymeric matrix material, the glass reinforcement material having a low coefficient of thermal expansion and/or a silica content of at least 60 percent, by weight.

The glass reinforcement material may have a high silica content. The glass reinforcement material may have a silica content of at least 60 percent, by weight. The glass reinforcement material may have a silica content of at least 80 percent, by weight. The glass reinforcement material may have a silica content of at least 99 percent, by weight. The composite structure may further comprise an interface between the carbon-reinforced composite component and the glass-reinforced composite component, wherein the interface may comprise a single cross-linked phase. The composite structure may further comprise an interface between the carbon-reinforced composite component and the glass-reinforced composite component, wherein the interface may comprise a single co-consolidated phase.

In another example, the disclosed composite structure includes a carbon-reinforced composite component and a glass-reinforced composite component connected to the carbon-reinforced composite component, wherein the glass-reinforced composite component includes a glass reinforcement material and a polymeric matrix material, the glass reinforcement material having a silica content of at least 60 percent, by weight and/or a low coefficient of thermal expansion.

### BRIEF DESCRIPTION OF THE DRAWINGS

Fig. 1A is a flow diagram depicting one example of the disclosed method for manufacturing composite structures with carbon-reinforced composite materials and glass-reinforced composite materials;
Fig. 1B is a flow diagram depicting one example of the disclosed method for manufacturing composite structures with carbon-reinforced composite materials and glass-reinforced composite materials;
Fig. 1C is a flow diagram depicting one example of the disclosed method for manufacturing composite structures with carbon-reinforced composite materials and glass-reinforced composite materials;
Fig. 1D is a flow diagram depicting one example of the disclosed method for manufacturing composite structures with carbon-reinforced composite materials and glass-reinforced composite materials;
Fig. 2A is a cross-sectional schematic view of a composite structure;
Fig. 2B is a cross-sectional schematic view of a composite layup on a tool;
Fig. 3A is a cross-sectional schematic view of a composite structure depicting a single cross-linked phase;
Fig. 3B is a cross-sectional schematic view of a composite structure depicting a single co-consolidated phase; and
Fig. 4 is a cross-sectional schematic view of a composite structure depicting warpage.

### DETAILED DESCRIPTION

In industries such as aerospace and automotive, carbon fiber composites are often used in combination with metals like aluminum to optimize strength-to-weight ratios, improve fuel efficiency, and enhance overall performance. However, when carbon fiber composites are directly attached to aluminum, galvanic corrosion can occur due to electrochemical interactions between the carbon fiber and aluminum. This corrosion degrades the structural integrity of the components over time. To prevent this, a fiberglass composite shim is typically placed between the carbon fiber and the metal. Fiberglass, being non-conductive, acts as an insulating barrier, eliminating the risk of galvanic reactions and ensuring long-term durability in applications involving aluminum.

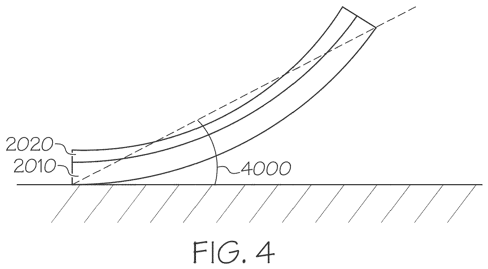

Despite this solution, the co-curing or co-consolidating of fiberglass layers onto structural composites presents challenges. As shown in Fig. 4, warpage 4000 often results from the difference in the coefficient of thermal expansion (CTE) between the fiberglass composite layer and the carbon fiber composite layer. This mismatch generally necessitates complex bonding methods, including extensive surface preparation and prolonged curing cycles to mitigate residual stresses, all of which lead to inefficiencies and higher production costs.

The disclosed method 1000, 1001, 1002, 1003 remedies the inefficiencies and high costs typically associated with manufacturing fiberglass composite-shimmed composite structures by eliminating unnecessary steps, such as pre-curing and surface preparation. These steps, often required in conventional methods, contribute to longer production times and increased costs without adding significant value. By removing these inefficient stages, the disclosed method not only reduces manufacturing time and expenses but also simplifies the overall process. This leads to greater production efficiency while maintaining the structural performance and durability of the final product compared to conventional methods.

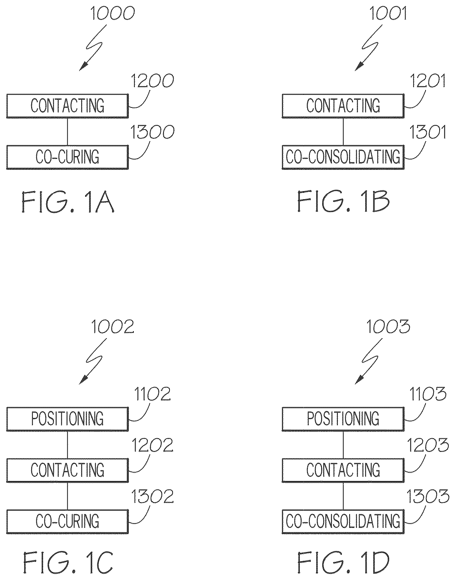

In one iteration of the disclosed method, the polymeric matrix materials 2110, 2210 of the carbon-reinforced composite component 2010 and the glass-reinforced composite component 2020 of the composite structure 2000 may be thermoset resin. Thermoset resin may include, but not limited to epoxy, bismaleimide, cyanate ester, and polyimide. In case when the disclosed method involves a thermoset resin, it is desirable to utilize co-curing step as shown in Fig. 1A and 1C. In one example, the polymeric matrix material 2110 of the carbon-reinforced composite component 2010 and the polymeric matrix material 2210 of the glass-reinforce composite component 2020 may be compositionally the same. In another example, the polymeric matrix material 2110 of the carbon-reinforced composite component 2010 and the polymeric matrix material 2210 of the glass-reinforce composite component 2020 may be compositionally different.

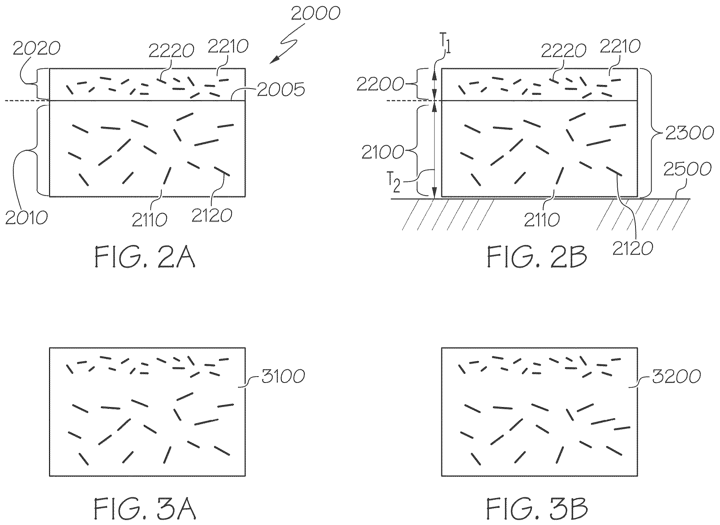

Referring to Fig 1A and 2B, one example of the disclosed method for manufacturing a composite structure, generally designated 1000, having a carbon fiber-reinforced composite component and a glass fiber-reinforced composite component includes contacting 1200 a glass-reinforced composite material 2200 with a carbon-reinforced composite material 2100 to yield a composite layup 2300, the glass-reinforced composite material 2200 which includes a glass reinforcement material 2220 with a silica content of at least 60 percent, by weight, and co-curing 1300 the composite layup 2300.

As shown in Fig. 1C, the disclosed method 1002 may further include a positioning 1102 step prior to contacting 1202 a glass-reinforced composite material 2200 with a carbon-reinforced composite material 2100 to yield a composite layup 2300. The positioning 1102 includes, but is not limited to, placing at least one of the glass-reinforced composite material 2200 and the carbon-reinforced composite material 2100 on a tool surface 2501 of a tool 2500. Those skilled in the art may choose the shape of the tool surface 2501 depending on a given project and its specifications. In one example, the shape of the tool surface 2501 may be flat. In another example, the shape of the tool surface 2501 may be complex and irregular. The size of the tool 2500 may vary depending on a given project. The size of the tool 2500 may depend on the size of the final product after co-curing 1300, 1302. It may be as small as a nut and bolt or as large as a wing or section of an aircraft body.

Referring to Fig. 4, when two layers of different materials are co-cured together, the difference in their coefficients of thermal expansion (CTE) causes warpage 4000. To minimize this warpage, and potentially prevent structural failure, it is desirable for those skilled in the art to select composite materials with CTE values that are as close to each other as possible. In other words, it is desired to choose a glass-reinforced composite material 2200 that includes a glass reinforcement material 2220 with a CTE value substantially similar to the CTE of the carbon reinforcement material 2120 of the carbon-reinforced composite material 2100 to which it is attached.

The CTE value of the carbon reinforcement material 2120 may vary depending on a given project where two composites are co-cured. In one example, the CTE value of the carbon reinforcement material 2120 may be between about 0.5 µm/m°C and 2.5 µm/m°C. In another example, the CTE value of the carbon reinforcement material 2120 may be about 0.5 µm/m°C. In another example, the CTE value of the carbon reinforcement material 2120 may be about 0.75 µm/m°C. In another example, the CTE value of the carbon reinforcement material 2120 may be about 1 µm/m°C. In another example, the CTE value of the carbon reinforcement material 2120 may be about 1.25 µm/m°C. In another example, the CTE value of the carbon reinforcement material 2120 may be about 1.4 µm/m°C. In another example, the CTE value of the carbon reinforcement material 2120 may be about 1.5 µm/m°C. In another example, the CTE value of the carbon reinforcement material 2120 may be about 1.6 µm/m°C. In another example, the CTE value of the carbon reinforcement material 2120 may be about 1.75 µm/m°C. In another example, the CTE value of the carbon reinforcement material 2120 may be about 2 µm/m°C. In another example, the CTE value of the carbon reinforcement material 2120 may be about 2.25 µm/m°C. In another example, the CTE value of the carbon reinforcement material 2120 may be about 2.5 µm/m°C.

A carbon reinforcement material 2120 of a carbon-reinforced composite material 2100 may take various forms, including but not limited to carbon fibers. Those skilled in the art may choose the proper form and orientation of the carbon reinforcement material 2120 depending on the specific project and its specifications. In one example, the carbon reinforcement material 2120 may be continuous fibers or chopped fibers. In another example, the carbon reinforcement material 2120 may take various orientations including, but not limited to unidirectional orientation, bidirectional orientation, and multi directional orientation. In another example, the weave pattern of the carbon reinforcement material 2120 may take various patterns including, but not limited to plain weave, twill weave, and satin weave. The volumetric fraction of the carbon reinforcement material 2120 within the matrix may also vary depending on a given project.

A glass reinforcement material 2220 of a glass-reinforced composite material 2200 may take various forms, including but not limited to fiberglass. Those skilled in the art may choose the proper form and orientation of the glass reinforcement material 2220 depending on a given project and its specifications. In one example, the glass reinforcement material 2220 may be continuous fibers or chopped fibers. In another example, the glass reinforcement material 2220 may take various orientations including, but not limited to unidirectional orientation, bidirectional orientation, and multi directional orientation. In another example, the weave pattern of the glass reinforcement material 2220 may take various patterns including, but not limited to plain weave, twill weave, and satin weave. The volumetric fraction of the glass reinforcement material 2220 within the matrix may also vary depending on a given project.

The CTE of the glass reinforcement material 2220 may vary depending on a given project where two composites are co-cured. As mentioned above, it is desirable to select a CTE of the glass reinforcement material 2220 that is substantially close to the CTE of the carbon reinforcement material 2120 in the carbon-reinforced composite material 2100 to which it is attached. In one example, the CTE of the glass reinforcement material 2220 may be between about 0.1 µm/m°C and 4 µm/m°C. In another example, the CTE of the glass reinforcement material 2220 may be about 0.4 µm/m°C. In another example, the CTE of the glass reinforcement material 2220 may be about 0.54 µm/m°C. In another example, the CTE of the glass reinforcement material 2220 may be about 0.7 µm/m°C. In another example, the CTE of the glass reinforcement material 2220 may be about 1 µm/m°C. In another example, the CTE of the glass reinforcement material 2220 may be about 1.5 µm/m°C. In another example, the CTE of the glass reinforcement material 2220 may be about 2 µm/m°C. In another example, the CTE of the glass reinforcement material 2220 may be about 2.5 µm/m°C. In another example, the CTE of the glass reinforcement material 2220 may be about 2.9 µm/m°C.

One of the main factors affecting the CTE value of the glass reinforcement material 2220 of the glass-reinforced composite material 2200 may be the silica content percentage, by weight. The silica content percentage may influence the CTE value of the glass reinforcement material 2220, and therefore affect the overall expansion of the glass-reinforced composite material 2200 when exposed to heat during co-curing 1300, 1302. In other words, assuming all other factors are equal between the glass-reinforced composite material 2200 and the carbon-reinforced composite material 2100, it may be desirable to choose a silica content percentage for the glass reinforcement material 2220 that brings its CTE as close as possible to the CTE of the carbon reinforcement material 2120 of the carbon-reinforced composite material 2100.

Thus, it is important to choose an appropriate silica content of the glass reinforcement material 2220 depending on a given project where two composites are co-cured. In one example, the silica content of the glass reinforcement material 2220 may range from about 60 percent to about 99.999 percent, by weight. In another example, the silica content of the glass reinforcement material 2220 may be about 64 percent. In another example, the silica content of the glass reinforcement material 2220 may be about 65 percent. In another example, the silica content of the glass reinforcement material 2220 may be about 66 percent. In another example, the silica content of the glass reinforcement material 2220 may be about 70 percent. In another example, the silica content of the glass reinforcement material 2220 may be about 75 percent. In another example, the silica content of the glass reinforcement material 2220 may be about 80 percent. In another example, the silica content of the glass reinforcement material 2220 may be about 85 percent. In another example, the silica content of the glass reinforcement material 2220 may be about 90 percent. In another example, the silica content of the glass reinforcement material 2220 may be about 95 percent. In another example, the silica content of the glass reinforcement material 2220 may be about 99.999 percent.

Those skilled in the art may choose to utilize commercially available products with a certain silica content percentage that matches the requirements of a given project. In one example, those skilled in the art may use a product under the trademark S-2 Glass, which is owned by AYG, headquartered at 2556 Wagener Road, Aiken, South Carolina. S-2 Glass contains approximately 64 to 66 percent silica by weight, which is higher than the silica content of conventional E-glass, typically ranging between 52 and 56 percent by weight. In another example, those skilled in the art may use a product under the trademark Astroquartz, which is owned by JSP Composite Materials, headquartered in Anderson, South Carolina. Astroquartz has a silica content of about 99.999 percent, by weight.

Contrary to an example using glass reinforcement material 2220 with more than 60 percent silica content, when standard E-glass with a silica content between approximately 52 percent and 56 percent is used, conventional methods for manufacturing a composite structure 2000, which includes a carbon-reinforced composite component 2010 and a glass-reinforced composite component 2020, would be required. In one non-limiting example, a conventional method may be used when the CTE value of E-glass, used as glass reinforcement material 2220, is 5.4 µm/m°C and the CTE value of carbon reinforcement material 2120 is 1.5 µm/m°C. Due to large CTE difference in such cases, the conventional method may involve multiple curing and other costly steps, resulting in an expensive and inefficient process. In other words, to co-cure the composite layers together without costly additional steps, such as pre-curing and surface preparation, it is desirable to use a glass reinforcement material 2220 with a CTE value closer to that of the carbon reinforcement material 2120 than to the CTE of E-glass. In another example, the disclosed method may involve the glass reinforcement material 2220 with a low CTE value and a high silica content.

Thus, depending on a given project, the CTE difference between the glass reinforcement material 2220 and the carbon reinforcement material 2120 may vary. In one example, the CTE of the glass reinforcement material 2220 is between about 30 percent and about 200 percent of a CTE of the carbon reinforcement material 2120. In another example, the CTE of the glass reinforcement material 2220 is about 20 percent of a CTE of the carbon reinforcement material 2120. In another example, the CTE of the glass reinforcement material 2220 is about 30 percent of a CTE of the carbon reinforcement material 2120. In another example, the CTE of the glass reinforcement material 2220 is about 40 percent of a CTE of the carbon reinforcement material 2120. In another example, the CTE of the glass reinforcement material 2220 is about 50 percent of a CTE of the carbon reinforcement material 2120. In another example, the CTE of the glass reinforcement material 2220 is about 70 percent of a CTE of the carbon reinforcement material 2120. In another example, the CTE of the glass reinforcement material 2220 is about 90 percent of a CTE of the carbon reinforcement material 2120. In another example, the CTE of the glass reinforcement material 2220 is about 110 percent of a CTE of the carbon reinforcement material 2120. In another example, the CTE of the glass reinforcement material 2220 is about 130 percent of a CTE of the carbon reinforcement material 2120. In another example, the CTE of the glass reinforcement material 2220 is about 150 percent of a CTE of the carbon reinforcement material 2120. In another example, the CTE of the glass reinforcement material 2220 is about 180 percent of a CTE of the carbon reinforcement material 2120. In another example, the CTE of the glass reinforcement material 2220 is about 200 percent of a CTE of the carbon reinforcement material 2120. In another example, the CTE of the glass reinforcement material 2220 is about 220 percent of a CTE of the carbon reinforcement material 2120. In another example, the CTE of the glass reinforcement material 2220 is about 250 percent of a CTE of the carbon reinforcement material 2120.

The glass-reinforced composite component 2020 may act as a shim that reinforces the carbon-reinforced composite component 2010 with which it is co-cured. The reinforcement provided by the glass-reinforced composite component 2020 may include, but is not limited to mechanical, structural, thermal, and chemical reinforcement. Referring to Fig. 2A and 2B, the amount of protection and reinforcement provided by the glass-reinforced composite component 2020 may vary depending on several factors, which may include, but are not limited to, thickness, composition, degree of cure, and quality of the interface 2005 between the glass-reinforced composite component 2020 and the carbon-reinforced composite component 2010.

The co-curing 1300, 1302 may be done in an autoclave. Depending on a given project, the degree of cure after the co-curing 1300, 1302 may vary. In one example, the co-curing 1300, 1302 process is performed to achieve a degree of cure of the composite structure 2000 between 70 percent and 99.999 percent. In another example, after the co-curing 1300, 1302 process, the degree of cure of the composite structure 2000 may be about 70 percent. In another example, after the co-curing 1300, 1302 process, the degree of cure of the composite structure 2000 may be about 80 percent. In another example, after the co-curing 1300, 1302 process, the degree of cure of the composite structure 2000 may be about 85 percent. In another example, after the co-curing 1300, 1302 process, the degree of cure of the composite structure 2000 may be about 90 percent. In another example, after the co-curing 1300, 1302 process, the degree of cure of the composite structure 2000 may be about 95 percent. In another example, after the co-curing 1300, 1302 process, the degree of cure of the composite structure 2000 may be about 99 percent.

Referring to Fig. 2A and 2B, depending on a given project, the average cross-sectional thickness T₁ of the glass-reinforced composite material 2200 may vary. In one example, the average cross-sectional thickness T₁ of the glass-reinforced composite material 2200 may be between about 0.508 mm (0.02 inch) and about 2.54 mm (0.1 inch). In another example, the average cross-sectional thickness T₁ of the glass-reinforced composite material 2200 may be about 0.508 mm (0.02 inch). In another example, the average cross-sectional thickness T₁ of the glass-reinforced composite material 2200 may be about 1.02 mm (0.04 inch). In another example, the average cross-sectional thickness T₁ of the glass-reinforced composite material 2200 may be about 1.52 mm (0.06 inch). In another example, the average cross-sectional thickness T₁ of the glass-reinforced composite material 2200 may be about 2.03 mm (0.08 inch). In another example, the average cross-sectional thickness T₁ of the glass-reinforced composite material 2200 may be about 2.54 mm (0.1 inch). In another example, the average cross-sectional thickness T₁ of the glass-reinforced composite material 2200 may be about 3.81 mm (0.15 inch). In another example, the average cross-sectional thickness T₁ of the glass-reinforced composite material 2200 may be about 5.08 mm (0.2 inch). In one example, the thickness of the glass-reinforced composite material 2200 may be substantially even. In another example, the thickness of the glass-reinforced composite material 2200 may vary across the composite structure 2000.

Still referring to Fig. 2A and 2B, in order to properly reinforce the carbon-reinforced composite component 2010, the ratio between the carbon-reinforced composite component 2010 and the glass-reinforced composite component 2020 may be an important factor. In one example, the carbon-reinforced composite material 2100 has an average cross-sectional thickness T₂ that is at least 2 times greater than the average cross-sectional thickness T₁ of the glass-reinforced composite material 2200. In one example, the carbon-reinforced composite material 2100 has an average cross-sectional thickness T₂ that is at least 5 times greater than the average cross-sectional thickness T₁ of the glass-reinforced composite material 2200. In one example, the carbon-reinforced composite material 2100 has an average cross-sectional thickness T₂ that is at least 10 times greater than the average cross-sectional thickness T₁ of the glass-reinforced composite material 2200. In one example, the carbon-reinforced composite material 2100 has an average cross-sectional thickness T₂ that is at least 15 times greater than the average cross-sectional thickness T₁ of the glass-reinforced composite material 2200.

Referring to Fig. 3A, the integrity and quality of the composite structure 2000 after the co-curing 1300, 1302 may depend on the final condition of the interface 2005 between the glass-reinforced composite component 2020 and the carbon-reinforced composite component 2010. The interface 2005 may be in a state that includes, but is not limited to, a single cross-linked phase 3100, a gradient phase, or a combination of different phases, depending on a given project and the specific area of the interface. For example, the interface 2005 may form a single cross-linked phase 3100 after co-curing 1300, 1302. In another example, the interface 2005 may result in a gradient phase after co-curing 1300, 1302.

In another iteration of the disclosed method, the polymeric matrix materials 2110, 2210 of the carbon-reinforced composite component 2010 and the glass-reinforced composite component 2020 of the composite structure 2000 may be thermoplastic. Thermoplastic may include, but not limited to polyether-ketone-ketone (PEKK), polyether-ether-ketone (PEEK), polyphenylene sulfide (PPS), and polyetherimide (PEI). In case when the disclosed method involves a thermoplastic, it is desirable to utilize co-consolidating step as shown in Fig. 1B and 1D. In one example, the polymeric matrix material 2110 of the carbon-reinforced composite component 2010 and the polymeric matrix material 2210 of the glass-reinforce composite component 2020 may be compositionally the same. In another example, the polymeric matrix material 2110 of the carbon-reinforced composite component 2010 and the polymeric matrix material 2210 of the glass-reinforce composite component 2020 may be compositionally different.

Referring to Fig. 1B, one example of the disclosed method 1001 for manufacturing a composite structure 2000 having a carbon-reinforced composite component 2010 and a glass-reinforced composite component 2020 includes contacting 1201 a glass-reinforced composite material 2200 with a carbon-reinforced composite material 2100 to yield a composite layup 2300, the glass-reinforced composite material 2200 including a glass reinforcement material 2220 and a polymeric matrix material 2210, wherein the glass reinforcement material 2220 has a silica content of at least 60 percent, by weight, and co-consolidating 1301, 1303 the composite layup 2300.

As shown in Fig. 1D, the disclosed method 1003 may further include a positioning 1102 step prior to contacting 1202 a glass-reinforced composite material 2200 with a carbon-reinforced composite material 2100 to yield a composite layup 2300. The positioning 1102 includes, but is not limited to, placing at least one of the glass-reinforced composite material 2200 and the carbon-reinforced composite material 2100 on a tool surface 2501 of a tool 2500. Those skilled in the art may choose the shape of the tool surface 2501 depending on a given project and its specifications. In one example, the shape of the tool surface 2501 may be flat. In another example, the shape of the tool surface 2501 may be complex and irregular. The size of the tool 2500 may vary depending on a given project. The size of the tool 2500 may depend on the size of the final product after co-consolidating 1301, 1303. It may be as small as a nut and bolt or as large as a wing or section of an aircraft body.

Referring to Fig. 4, when two layers of different materials are co-consolidated together, the difference in their coefficients of thermal expansion (CTE) causes warpage 4000. To minimize this warpage, and potentially prevent structural failure, it is desirable for those skilled in the art to select composite materials with CTE values that are as close to each other as possible. In other words, it is desired to choose a glass-reinforced composite material 2200 that includes a glass reinforcement material 2220 with a CTE value substantially similar to the CTE of the carbon reinforcement material 2120 of the carbon-reinforced composite material 2100 to which it is attached.

The CTE value of the carbon reinforcement material 2120 may vary depending on a given project where two composites are co-consolidated. In one example, the CTE value of the carbon reinforcement material 2120 may be between about 0.5 µm/m°C and 2.5 µm/m°C. In another example, the CTE value of the carbon reinforcement material 2120 may be about 0.5 µm/m°C. In another example, the CTE value of the carbon reinforcement material 2120 may be about 0.75 µm/m°C. In another example, the CTE value of the carbon reinforcement material 2120 may be about 1 µm/m°C. In another example, the CTE value of the carbon reinforcement material 2120 may be about 1.25 µm/m°C. In another example, the CTE value of the carbon reinforcement material 2120 may be about 1.4 µm/m°C. In another example, the CTE value of the carbon reinforcement material 2120 may be about 1.5 µm/m°C. In another example, the CTE value of the carbon reinforcement material 2120 may be about 1.6 µm/m°C. In another example, the CTE value of the carbon reinforcement material 2120 may be about 1.75 µm/m°C. In another example, the CTE value of the carbon reinforcement material 2120 may be about 2 µm/m°C. In another example, the CTE value of the carbon reinforcement material 2120 may be about 2.25 µm/m°C. In another example, the CTE value of the carbon reinforcement material 2120 may be about 2.5 µm/m°C.

A carbon reinforcement material 2120 of a carbon-reinforced composite material 2100 may take various forms, including but not limited to carbon fiber. Those skilled in the art may choose the proper form and orientation of the carbon reinforcement material 2120 depending on the specific project and its specifications. In one example, the carbon reinforcement material 2120 may be provided in various lengths. In one example, the carbon reinforcement material 2120 may include, but not limited to continuous fibers, long fibers, short fibers, and chopped fibers. In another example, the carbon reinforcement material 2120 may take various orientations including, but not limited to unidirectional orientation, bidirectional orientation, and multi directional orientation. In another example, the weave pattern of the carbon reinforcement material 2120 may take various patterns including, but not limited to plain weave, twill weave, and satin weave. The volumetric fraction of the carbon reinforcement material 2120 within the matrix may also vary depending on a given project.

A glass reinforcement material 2220 of a glass-reinforced composite material 2200 may take various forms, including but not limited to fiberglass. Those skilled in the art may choose the proper form and orientation of the glass reinforcement material 2220 depending on a given project and its specifications. Depending on the given project, the glass reinforcement material 2220 may be provided in various lengths. In one example, the glass reinforcement material 2220 may include, but not limited to continuous fibers, long fibers, short fibers, and chopped fibers. In another example, the glass reinforcement material 2220 may take various orientations including, but not limited to unidirectional orientation, bidirectional orientation, and multi directional orientation. In another example, the weave pattern of the glass reinforcement material 2220 may take various patterns including, but not limited to plain weave, twill weave, and satin weave. The volumetric fraction of the glass reinforcement material 2220 within the matrix may also vary depending on a given project.

The CTE of the glass reinforcement material 2220 may vary depending on a given project where two composites are co-consolidated. As mentioned above, it is desirable to select a CTE of the glass reinforcement material 2220 that is substantially close to the CTE of the carbon reinforcement material 2120 in the carbon-reinforced composite material 2100 to which it is attached. In one example, the CTE of the glass reinforcement material 2220 may be between about 0.1 µm/m°C and 4 µm/m°C. In another example, the CTE of the glass reinforcement material 2220 may be about 0.4 µm/m°C. In another example, the CTE of the glass reinforcement material 2220 may be about 0.54 µm/m°C. In another example, the CTE of the glass reinforcement material 2220 may be about 0.7 µm/m°C. In another example, the CTE of the glass reinforcement material 2220 may be about 1 µm/m°C. In another example, the CTE of the glass reinforcement material 2220 may be about 1.5 µm/m°C. In another example, the CTE of the glass reinforcement material 2220 may be about 2 µm/m°C. In another example, the CTE of the glass reinforcement material 2220 may be about 2.5 µm/m°C. In another example, the CTE of the glass reinforcement material 2220 may be about 2.9 µm/m°C.

One of the main factors affecting the CTE value of the glass reinforcement material 2220 of the glass-reinforced composite material 2200 may be the silica content percentage, by weight. The silica content percentage may influence the CTE value of the glass reinforcement material 2220, and therefore affect the overall expansion of the glass-reinforced composite material 2200 when exposed to heat during co-consolidating 1301, 1303. In other words, assuming all other factors are equal between the glass-reinforced composite material 2200 and the carbon-reinforced composite material 2100, it may be desirable to choose a silica content percentage for the glass reinforcement material 2220 that brings its CTE as close as possible to the CTE of the carbon reinforcement material 2120 of the carbon-reinforced composite material 2100.

Thus, it is important to choose an appropriate silica content of the glass reinforcement material 2220 depending on a given project where two composites are co-consolidated. In one example, the silica content of the glass reinforcement material 2220 may range from about 60 percent to about 99.999 percent, by weight. In another example, the silica content of the glass reinforcement material 2220 may be about 64 percent. In another example, the silica content of the glass reinforcement material 2220 may be about 65 percent. In another example, the silica content of the glass reinforcement material 2220 may be about 66 percent. In another example, the silica content of the glass reinforcement material 2220 may be about 70 percent. In another example, the silica content of the glass reinforcement material 2220 may be about 75 percent. In another example, the silica content of the glass reinforcement material 2220 may be about 80 percent. In another example, the silica content of the glass reinforcement material 2220 may be about 85 percent. In another example, the silica content of the glass reinforcement material 2220 may be about 90 percent. In another example, the silica content of the glass reinforcement material 2220 may be about 95 percent. In another example, the silica content of the glass reinforcement material 2220 may be about 99.999 percent.

Those skilled in the art may choose to utilize commercially available products with a certain silica content percentage that matches the requirements of a given project. In one example, those skilled in the art may use a product under the trademark S-2 Glass, which is owned by AYG, headquartered at 2556 Wagener Road, Aiken, South Carolina. S-2 Glass contains approximately 64 to 66 percent silica by weight, which is higher than the silica content of conventional E-glass, typically ranging between 52 and 56 percent by weight. In another example, those skilled in the art may use a product under the trademark Astroquartz, which is owned by JSP Composite Materials, headquartered in Anderson, South Carolina. Astroquartz has a silica content of about 99.999 percent, by weight.

Contrary to an example using glass reinforcement material 2220 with more than 60 percent silica content, when standard E-glass with a silica content between approximately 52 percent and 56 percent is used, conventional methods for manufacturing a composite structure 2000, which includes a carbon-reinforced composite component 2010 and a glass-reinforced composite component 2020, would be required. In one non-limiting example, a conventional method may be used when the CTE value of E-glass, used as glass reinforcement material 2220, is 5.4 µm/m°C and the CTE value of carbon reinforcement material 2120 is 1.5 µm/m°C. Due to large difference in CTE in such cases, the conventional method may involve multiple consolidating and other costly steps, resulting in an expensive and inefficient process. In other words, to co-consolidate the composite layers together without costly additional steps, such as pre-consolidating and surface preparation, it is desirable to use a glass reinforcement material 2220 with a CTE value closer to that of the carbon reinforcement material 2120 than to the CTE of E-glass. In another example, the disclosed method may involve the glass reinforcement material 2220 with a low CTE value and a high silica content.

Thus, depending on a given project, the CTE difference between the glass reinforcement material 2220 and the carbon reinforcement material 2120 may vary. In one example, the CTE of the glass reinforcement material 2220 is between about 30 percent and about 200 percent of a CTE of the carbon reinforcement material 2120. In another example, the CTE of the glass reinforcement material 2220 is about 20 percent of a CTE of the carbon reinforcement material 2120. In another example, the CTE of the glass reinforcement material 2220 is about 30 percent of a CTE of the carbon reinforcement material 2120. In another example, the CTE of the glass reinforcement material 2220 is about 40 percent of a CTE of the carbon reinforcement material 2120. In another example, the CTE of the glass reinforcement material 2220 is about 50 percent of a CTE of the carbon reinforcement material 2120. In another example, the CTE of the glass reinforcement material 2220 is about 70 percent of a CTE of the carbon reinforcement material 2120. In another example, the CTE of the glass reinforcement material 2220 is about 90 percent of a CTE of the carbon reinforcement material 2120. In another example, the CTE of the glass reinforcement material 2220 is about 110 percent of a CTE of the carbon reinforcement material 2120. In another example, the CTE of the glass reinforcement material 2220 is about 130 percent of a CTE of the carbon reinforcement material 2120. In another example, the CTE of the glass reinforcement material 2220 is about 150 percent of a CTE of the carbon reinforcement material 2120. In another example, the CTE of the glass reinforcement material 2220 is about 180 percent of a CTE of the carbon reinforcement material 2120. In another example, the CTE of the glass reinforcement material 2220 is about 200 percent of a CTE of the carbon reinforcement material 2120. In another example, the CTE of the glass reinforcement material 2220 is about 220 percent of a CTE of the carbon reinforcement material 2120. In another example, the CTE of the glass reinforcement material 2220 is about 250 percent of a CTE of the carbon reinforcement material 2120.

The glass-reinforced composite component 2020 may act as a shim that reinforces the carbon-reinforced composite component 2010 with which it is co-consolidated. The reinforcement provided by the glass-reinforced composite component 2020 may include, but is not limited to mechanical, structural, thermal, and chemical reinforcement. The amount of protection and reinforcement provided by the glass-reinforced composite component 2020 may vary depending on several factors which may include, but not limited to thickness, composition, degree of consolidation, and quality of the interface 2005 between the glass-reinforced composite component 2020 and the carbon-reinforced composite component 2010.

The co-consolidating 1301, 1303 may be done in an autoclave. Depending on a given project, the degree of consolidation after the co-consolidating 1301, 1303 process may vary. In one example, the co-consolidating 1301, 1303 process is performed to achieve a degree of consolidation of the composite structure 2000 between 70 percent and 99.999 percent. In another example, after the co-consolidating 1301, 1303 process, the degree of consolidation of the composite structure 2000 may be about 70 percent. In another example, after the co-consolidating 1301, 1303 process, the degree of consolidation of the composite structure 2000 may be about 80 percent. In another example, after the co-consolidating 1301, 1303 process, the degree of consolidation of the composite structure 2000 may be about 85 percent. In another example, after the co-consolidating 1301, 1303 process, the degree of consolidation of the composite structure 2000 may be about 90 percent. In another example, after the co-consolidating 1301, 1303 process, the degree of consolidation of the composite structure 2000 may be about 95 percent. In another example, after the co-consolidating 1301, 1303 process, the degree of consolidation of the composite structure 2000 may be about 99 percent.

Referring to Fig. 2A and 2B, depending on a given project, the average cross-sectional thickness T₁ of the glass-reinforced composite material 2200 may vary. In one example, the average cross-sectional thickness T₁ of the glass-reinforced composite material 2200 may be between about 0.508 mm (0.02 inch) and about 2.54 mm (0.1 inch). In another example, the average cross-sectional thickness T₁ of the glass-reinforced composite material 2200 may be about 0.508 mm (0.02 inch). In another example, the average cross-sectional thickness T₁ of the glass-reinforced composite material 2200 may be about 1.02 mm (0.04 inch). In another example, the average cross-sectional thickness T₁ of the glass-reinforced composite material 2200 may be about 1.52 mm (0.06 inch). In another example, the average cross-sectional thickness T₁ of the glass-reinforced composite material 2200 may be about 2.03 mm (0.08 inch). In another example, the average cross-sectional thickness T₁ of the glass-reinforced composite material 2200 may be about 2.54 mm (0.1 inch). In another example, the average cross-sectional thickness T₁ of the glass-reinforced composite material 2200 may be about 3.81 mm (0.15 inch). In another example, the average cross-sectional thickness T₁ of the glass-reinforced composite material 2200 may be about 5.08 mm (0.2 inch). In one example, the thickness of the glass-reinforced composite material 2200 may be substantially even. In another example, the thickness of the glass-reinforced composite material 2200 may vary across the composite structure 2000.

Still referring to Fig. 2A and 2B, in order to properly reinforce the carbon-reinforced composite component 2010, the ratio between the carbon-reinforced composite component 2010 and the glass-reinforced composite component 2020 may be an important factor. In one example, the carbon-reinforced composite material 2100 has an average cross-sectional thickness T₂ that is at least 2 times greater than the average cross-sectional thickness T₁ of the glass-reinforced composite material 2200. In one example, the carbon-reinforced composite material 2100 has an average cross-sectional thickness T₂ that is at least 5 times greater than the average cross-sectional thickness T₁ of the glass-reinforced composite material 2200. In one example, the carbon-reinforced composite material 2100 has an average cross-sectional thickness T₂ that is at least 10 times greater than the average cross-sectional thickness T₁ of the glass-reinforced composite material 2200. In one example, the carbon-reinforced composite material 2100 has an average cross-sectional thickness T₂ that is at least 15 times greater than the average cross-sectional thickness T₁ of the glass-reinforced composite material 2200.

Referring to Fig. 3B, the integrity and quality of the composite structure 2000 after the co-consolidating 1301, 1303 may depend on the final condition of the interface 2005 between the glass-reinforced composite component 2020 and the carbon-reinforced composite component 2010. The interface 2005 may be in a state that includes, but is not limited to, a single co-consolidated phase 3200, a gradient phase, or a combination of different phases, depending on a given project and the specific area of the interface. For example, the interface 2005 may form a single co-consolidated phase 3200 after co-consolidating 1301, 1303. In another example, the interface 2005 may result in a gradient phase after co-consolidating 1301, 1303.

Different examples of the disclosed methods for manufacturing composite structures with carbon-reinforced composite materials and glass-reinforced composite materials include a variety of components, features, and functionalities. It should be understood that the various examples of the disclosed methods for manufacturing composite structures with carbon-reinforced composite materials and glass-reinforced composite materials disclosed herein may include any of the components, features, and functionalities of any of the other examples of the disclosed methods for manufacturing composite structures with carbon-reinforced composite materials and glass-reinforced composite materials, and all of such possibilities are intended to be within the scope of the present disclosure.

The disclosed methods for manufacturing composite structures with carbon-reinforced composite materials and glass-reinforced composite materials are described in the context of aerospace vehicles. However, one of ordinary skill in the art will readily recognize that the disclosed methods for manufacturing composite structures with carbon-reinforced composite materials and glass-reinforced composite materials are suitable for a variety of applications, and the present disclosure is not limited to aerospace applications. For example, the disclosed methods for manufacturing composite structures with carbon-reinforced composite materials and glass-reinforced composite materials may be implemented in various types of vehicles including, for example, helicopters, passenger ships, automobiles, marine products (boat, motors, etc.) and the like. Non-vehicle applications are also contemplated.

Although the disclosed methods manufacturing composite structures with carbon-reinforced composite materials and glass-reinforced composite materials in an aerospace environment, it is contemplated that the disclosed methods for manufacturing composite structures with carbon-reinforced composite materials and glass-reinforced composite materials may be implemented in any industry in accordance with the applicable industry standards. The specific method for manufacturing composite structures with carbon-reinforced composite materials and glass-reinforced composite materials can be selected and tailored depending upon the particular application.

Although various examples of the disclosed methods for manufacturing composite structures with carbon-reinforced composite materials and glass-reinforced composite materials have been shown and described, modifications may occur to those skilled in the art upon reading the specification. The present application includes such modifications and is limited only by the scope of the claims.

The disclosure also comprises the following clauses:

### Clauses

1. A method (1000) for manufacturing a composite structure (2000) comprising a carbon-reinforced composite component (2010) and a glass-reinforced composite component (2020), the method (1000) comprising:
   contacting (1200) a glass-reinforced composite material (2200) with a carbon-reinforced composite material (2100) to yield a composite layup (2300), the glass-reinforced composite material (2200) comprising a glass reinforcement material (2220) and a polymeric matrix material (2210), wherein the glass reinforcement material (2220) has a low coefficient of thermal expansion; and
   co-curing (1300) the composite layup (2300).
2. The method (1000) of Clause 1, wherein the composite layup (2300) comprises at least one of S-2 glass and Astroquarts.
3. The method (1000) of Clause 1 or 2, wherein the glass reinforcement material (2220) comprises fiberglass.
4. The method (1000) of any one of the preceding Clauses, wherein the glass reinforcement material (2220) has a high silica content.
5. The method (1000) of any one of the preceding Clauses, wherein the glass reinforcement material (2220) has a silica content of at least 60 percent, by weight.
6. The method (1000) of any one of the preceding Clauses, wherein the glass reinforcement material (2220) has a silica content of at least 80 percent, by weight.
7. The method (1000) of any one of the preceding Clauses, wherein the glass reinforcement material (2220) has a silica content of at least 99 percent, by weight.
8. The method (1000) of any one of the preceding Clauses, wherein the glass reinforcement material (2220) has a coefficient of thermal expansion between about 0.1 µm/m°C and about 4 µm/m°C.
9. The method (1000) of any one of the preceding Clauses, wherein the glass reinforcement material (2220) has a coefficient of thermal expansion of at least 0.5 µm/m°C.
10. The method (1000) of any one of the preceding Clauses, wherein the glass reinforcement material (2220) has a coefficient of thermal expansion of at most 4 µm/m°C.
11. The method (1000) of any one of the preceding Clauses, wherein the polymeric matrix material (2210) of the glass-reinforced composite material (2200) comprises a thermoset resin.
12. The method (1000) of Clause 11, wherein the thermoset resin comprises epoxy.
13. The method (1000) of Clause 11 or 12, wherein the thermoset resin comprises at least one of epoxy, bismaleimide, cyanate ester, and polyimide.
14. The method (1000) of any one of the preceding Clauses, wherein the carbon-reinforced composite material (2100) comprises a carbon reinforcement material (2120) and a polymeric matrix material (2110).
15. The method (1000) of Clause 14, wherein the carbon reinforcement material (2120) comprises carbon fibers.
16. The method (1000) of Clause 14 or 15, wherein the carbon reinforcement material (2120) has a coefficient of thermal expansion of at most 2 µm/m°C.
17. The method (1000) of any one of Clauses 14 to 16, wherein the carbon reinforcement material (2120) has a coefficient of thermal expansion of at most 1.5 µm/m°C.
18. The method (1000) of any one of Clauses 14 to 17, wherein the carbon reinforcement material (2120) has a coefficient of thermal expansion of at most 1 µm/m°C.
19. The method (1000) of any one of Clauses 14 to 18, wherein the polymeric matrix material (2110) of the carbon-reinforced composite material (2100) comprises a thermoset resin.
20. The method (1000) of Clause 19, wherein the thermoset resin comprises epoxy.
21. The method (1000) of Clause 19 or 20, wherein the thermoset resin comprises at least one of epoxy, bismaleimide, cyanate ester, and polyimide.
22. The method (1000) of any one of Clauses 14 to 21, wherein the polymeric matrix material (2110) of the carbon-reinforced composite material (2100) and the polymeric matrix material (2210) of the glass-reinforced composite material (2200) are compositionally the same.
23. The method (1000) of any one of Clauses 14 to 22,wherein the polymeric matrix material (2110) of the carbon-reinforced composite material (2100) and the polymeric matrix material (2210) of the glass-reinforced composite material (2200) are compositionally different.
24. The method (1000) of any one of Clauses 14 to 23, wherein a coefficient of thermal expansion of the glass reinforcement material (2220) is between about 30 percent and about 200 percent of a coefficient of thermal expansion of the carbon reinforcement material (2120).
25. The method (1000) of any one of Clauses 14 to 24, wherein a coefficient of thermal expansion of the glass reinforcement material (2220) is between about 35 percent and about 150 percent of a coefficient of thermal expansion of the carbon reinforcement material (2120).
26. The method (1000) of any one of the preceding Clauses, wherein the glass-reinforced composite material (2200) has an average cross-sectional thickness (T₁) between about 0.508 mm (0.02 inch) and about 2.54 mm (0.1 inch).
27. The method (1000) of any one of the preceding Clauses, wherein the carbon-reinforced composite material (2100) has an average cross-sectional thickness (T₂) that is at least 10 times greater than the average cross-sectional thickness (T₁) of the glass-reinforced composite material (2200).
28. The method (1000) of any one of the preceding Clauses, wherein the co-curing (1300) is performed in an autoclave.
29. The method (1000) of any one of the preceding Clauses, wherein the co-curing (1300) is performed to achieve a degree of cure of at least 90 percent.
30. The method (1000) of any one of the preceding Clauses, further comprising, prior to contacting (1202) the glass-reinforced composite material (2200) with the carbon-reinforced composite material (2100), positioning (1102) the carbon-reinforced composite material (2100) on a tool surface (2501) of a tool (2500).
31. The method (1000) of any one of the preceding Clauses, wherein the composite structure (2000) further comprises an interface (2005) between the carbon-reinforced composite component (2010) and the glass-reinforced composite component (2020), wherein the interface (2005) comprises a single cross-linked phase.
32. A method (1001) for manufacturing a composite structure (2000) comprising a carbon-reinforced composite component (2010) and a glass-reinforced composite component (2020), the method (1000) comprising:
   contacting (1201) a glass-reinforced composite material (2200) with a carbon-reinforced composite material (2100) to yield a composite layup (2300), the glass-reinforced composite material (2200) comprising a glass reinforcement material (2220) and a polymeric matrix material (2210), wherein the glass reinforcement material (2220) has a silica content of at least 60 percent, by weight; and
   co-consolidating (1301) the composite layup (2300).
33. The method (1001) of Clause 32, wherein the glass reinforcement material (2220) comprises fiberglass.
34. The method (1001) of Clause 32 or 33, wherein the glass reinforcement material (2220) has a silica content of at least 64 percent.
35. The method (1001) of any one of Clauses 32 to 34, wherein the glass reinforcement material (2220) has a silica content of at least 80 percent.
36. The method (1001) of any one of Clauses 32 to 35, wherein the glass reinforcement material (2220) has a silica content of at least 99 percent.
37. The method (1001) of any one of Clauses 32 to 36, wherein the glass reinforcement material (2220) has a coefficient of thermal expansion between about 0.1 µm/m°C and about 4 µm/m°C.
38. The method (1001) of any one of Clauses 32 to 37, wherein the glass reinforcement material (2220) has a coefficient of thermal expansion of at least 0.5 µm/m°C.
39. The method (1001) of any one of Clauses 32 to 38, wherein the glass reinforcement material (2220) has a coefficient of thermal expansion of at most 4 µm/m°C.
40. The method (1001) of any one of Clauses 32 to 39, wherein the polymeric matrix material (2210) of the glass-reinforced composite material (2200) comprises a thermoplastic.
41. The method (1001) of Clause 40, wherein the thermoplastic comprises at least one of polyether-ketone-ketone (PEKK), polyether-ether-ketone (PEEK), polyphenylene sulfide (PPS), and polyetherimide (PEI).
42. The method (1001) of any one of Clauses 32 to 41, wherein the carbon-reinforced composite material (2100) comprises a carbon reinforcement material (2120) and a polymeric matrix material (2110).
43. The method (1001) of Clause 42, wherein the carbon reinforcement material (2120) has a coefficient of thermal expansion (CTE) of at most 2 µm/m°C.
44. The method (1001) of Clause 42 or 43, wherein the carbon reinforcement material (2120) has a coefficient of thermal expansion (CTE) of at most 1.5 µm/m°C.
45. The method (1001) of any one of Clauses 42 to 44, wherein the carbon reinforcement material (2120) has a coefficient of thermal expansion (CTE) of at most 1 µm/m°C.
46. The method (1001) of any one of Clauses 42 to 45, wherein the polymeric matrix material (2110) of the carbon-reinforced composite material (2100) comprises a thermoplastic.
47. The method (1001) of Clause 46, wherein the thermoplastic comprises at least one of polyether-ketone-ketone (PEKK), polyether-ether-ketone (PEEK), polyphenylene sulfide (PPS), and polyetherimide (PEI).
48. The method (1001) of any one of Clauses 42 to 47, wherein the polymeric matrix material (2110) of the carbon-reinforced composite material (2100) and the polymeric matrix material (2210) of the glass-reinforced composite material (2200) are compositionally the same.
49. The method (1001) of any one of Clauses 42 to 48, wherein the polymeric matrix material (2110) of the carbon-reinforced composite material (2100) and the polymeric matrix material (2210) of the glass-reinforced composite material (2200) are compositionally different.
50. The method (1001) of any one of Clauses 42 to 49, wherein a coefficient of thermal expansion of the glass reinforcement material (2220) is between about 30 percent and about 200 percent of a coefficient of thermal expansion of the carbon reinforcement material (2120).
51. The method (1001) of any one of Clauses 42 to 50, wherein a coefficient of thermal expansion of the glass reinforcement material (2220) is between about 35 percent and about 150 percent of a coefficient of thermal expansion of the carbon reinforcement material (2120).
52. The method (1001) of any one of Clauses 32 to 51, wherein the glass-reinforced composite material (2200) has an average cross-sectional thickness (T₁) between about 0.508 mm (0.02 inch) and about 2.54 mm (0.1 inch).
53. The method (1001) of any one of Clauses 32 to 52, wherein the carbon-reinforced composite material (2100) has an average cross-sectional thickness (T₂) that is at least 10 times greater than the average cross-sectional thickness (T₁) of the glass-reinforced composite material (2200).
54. The method (1001) of any one of Clauses 32 to 53, wherein the co-consolidating (1301) is performed in an autoclave.
55. The method (1001) of any one of Clauses 32 to 54, wherein the composite structure (2000) further comprises an interface (2005) between the carbon-reinforced composite component (2010) and the glass-reinforced composite component (2020), wherein the interface (2005) comprises a single co-consolidated phase.
56. A method (1000) for manufacturing a composite structure (2000) comprising a carbon-reinforced composite component (2010) and a glass-reinforced composite component (2020), the method (1000) comprising:
   contacting (1200) a glass-reinforced composite material (2200) with a carbon-reinforced composite material (2100) to yield a composite layup (2300), the glass-reinforced composite material (2200) comprising a glass reinforcement material (2220) and a polymeric matrix material (2210), a carbon-reinforced composite material (2100) comprising a carbon reinforcement material (2120) and a polymeric matrix material (2110); and
   co-curing (1300) the composite layup (2300),
   wherein the glass reinforcement material (2220) has a low coefficient of thermal expansion (CTE) that substantially matches a CTE of the carbon reinforcement material (2120) such that the low CTE of the glass reinforcement material (2220) minimizes residual stresses that causes warpage (4000) during the co-curing (1300).
57. A composite structure (2000) comprising:
   a carbon-reinforced composite component (2010); and
   a glass-reinforced composite component (2020) connected to the carbon-reinforced composite component (2010), wherein the glass-reinforced composite component (2020) comprises a glass reinforcement material (2220) and a polymeric matrix material (2210), the glass reinforcement material (2220) having a low coefficient of thermal expansion.
58. The composite structure (2000) of Clause 57, wherein the glass reinforcement material (2220) has a high silica content.
59. The composite structure (2000) of Clause 57 or 58, wherein the glass reinforcement material (2220) has a silica content of at least 60 percent, by weight.
60. The composite structure (2000) of any one of Clauses 57 to 59, wherein the glass reinforcement material (2220) has a silica content of at least 80 percent, by weight.
61. The composite structure (2000) of any one of Clauses 57 to 60, wherein the glass reinforcement material (2220) has a silica content of at least 99 percent, by weight.
62. The composite structure (2000) of any one of Clauses 57 to 61, further comprising an interface (2005) between the carbon-reinforced composite component (2010) and the glass-reinforced composite component (2020), wherein the interface (2005) comprises a single cross-linked phase.
63. The composite structure (2000) of any one of Clauses 57 to 62, further comprising an interface (2005) between the carbon-reinforced composite component (2010) and the glass-reinforced composite component (2020), wherein the interface (2005) comprises a single co-consolidated phase.

## Claims

1. A method (1000) for manufacturing a composite structure (2000) comprising a carbon-reinforced composite component (2010) and a glass-reinforced composite component (2020), the method (1000) comprising:
contacting (1200) a glass-reinforced composite material (2200) with a carbon-reinforced composite material (2100) to yield a composite layup (2300), the glass-reinforced composite material (2200) comprising a glass reinforcement material (2220) and a polymeric matrix material (2210), wherein the glass reinforcement material (2220) has a low coefficient of thermal expansion; and
co-curing (1300) the composite layup (2300).

2. The method (1000) of Claim 1, wherein the glass reinforcement material (2220) comprises fiberglass.

3. The method (1000) of any one of the preceding Claims, wherein the glass reinforcement material (2220) has a silica content of at least 60 percent, by weight, preferably at least 80 percent, by weight.

4. The method (1000) of any one of the preceding Claims, wherein the glass reinforcement material (2220) has a coefficient of thermal expansion between about 0.1 µm/m°C and about 4 µm/m°C, preferably at least 0.5 µm/m°C.

5. The method (1000) of any one of the preceding Claims, wherein the polymeric matrix material (2210) of the glass-reinforced composite material (2200) comprises a thermoset resin.

6. The method (1000) of any one of the preceding Claims, wherein the carbon-reinforced composite material (2100) comprises a carbon reinforcement material (2120) and a polymeric matrix material (2110).

7. The method (1000) of Claim 6, wherein:
the carbon reinforcement material (2120) has a coefficient of thermal expansion of at most 2 µm/m°C, preferably at most 1.5 µm/m°C; and/or
the polymeric matrix material (2110) of the carbon-reinforced composite material (2100) comprises a thermoset resin; and/or
the polymeric matrix material (2110) of the carbon-reinforced composite material (2100) and the polymeric matrix material (2210) of the glass-reinforced composite material (2200) are compositionally different.

8. The method (1000) of Claim 6 or 7, wherein a coefficient of thermal expansion of the glass reinforcement material (2220) is between about 30 percent and about 200 percent of a coefficient of thermal expansion of the carbon reinforcement material (2120).

9. The method (1000) of any one of the preceding Claims, wherein the glass-reinforced composite material (2200) has an average cross-sectional thickness (T₁) between about 0.508 mm (0.02 inch) and about 2.54 mm (0.1 inch).

10. The method (1000) of any one of the preceding Claims, wherein the carbon-reinforced composite material (2100) has an average cross-sectional thickness (T₂) that is at least 10 times greater than the average cross-sectional thickness (T₁) of the glass-reinforced composite material (2200).

11. The method (1000) of any one of the preceding Claims, wherein the co-curing (1300) is performed to achieve a degree of cure of at least 90 percent.

12. The method (1000) of any one of the preceding Claims, further comprising, prior to contacting (1202) the glass-reinforced composite material (2200) with the carbon-reinforced composite material (2100), positioning (1102) the carbon-reinforced composite material (2100) on a tool surface (2501) of a tool (2500).

13. The method (1000) of any one of the preceding Claims, wherein the composite structure (2000) further comprises an interface (2005) between the carbon-reinforced composite component (2010) and the glass-reinforced composite component (2020), wherein the interface (2005) comprises a single cross-linked phase.

14. A method (1001) for manufacturing a composite structure (2000) comprising a carbon-reinforced composite component (2010) and a glass-reinforced composite component (2020), the method (1000) comprising:
contacting (1201) a glass-reinforced composite material (2200) with a carbon-reinforced composite material (2100) to yield a composite layup (2300), the glass-reinforced composite material (2200) comprising a glass reinforcement material (2220) and a polymeric matrix material (2210), wherein the glass reinforcement material (2220) has a silica content of at least 60 percent, by weight; and
co-consolidating (1301) the composite layup (2300).

15. A composite structure (2000) comprising:
a carbon-reinforced composite component (2010); and
a glass-reinforced composite component (2020) connected to the carbon-reinforced composite component (2010), wherein the glass-reinforced composite component (2020) comprises a glass reinforcement material (2220) and a polymeric matrix material (2210), the glass reinforcement material (2220) having a low coefficient of thermal expansion.
